# EUROPEAN PATENT SPECIFICATION

(11) **EP 3 051 789 B1**
(45) Date of publication and mention of the grant of the patent: **04.10.2017**
(21) Application number: 15290024.7
(22) Date of filing: 02.02.2015
(51) Int. Cl.: H04M 11/06, H04B 3/32

(54) **Coexistence between different communication line standards**
Koexistenz zwischen verschiedenen Kommunikationsleitungsstandards
Coexistence entre différentes normes de ligne de communication

(43) Date of publication of application: 03.08.2016
(73) Proprietor: Alcatel Lucent, 92100 Boulogne-Billancourt (FR)
(72) Inventor: Guenach, Mamoun, 2018 Antwerpen (BE); Maes, Jochen, 2018 Antwerpen (BE)
(74) Representative: ALU Antw Patent Attorneys

(56) References cited:
- EP-A1- 2 793 403
- HERNAN CORDOVA ET AL: "Towards a compatible Level-2 DSM algorithm to protect downstream multiuser xDSL legacy systems", COMPUTERS AND COMMUNICATIONS (ISCC), 2011 IEEE SYMPOSIUM ON, IEEE, 28 June 2011 (2011-06-28), pages 497-500, XP032018440, DOI: 10.1109/ISCC.2011.5983886 ISBN: 978-1-4577-0680-6
- MAZZENGA FRANCO ET AL: "A Downstream Power Back-Off Procedure for Mixed FTTC and FTTDp Scenarios", IEEE COMMUNICATIONS LETTERS, IEEE SERVICE CENTER, PISCATAWAY, NJ, US, vol. 18, no. 6, 1 June 2014 (2014-06-01), pages 965-968, XP011550314, ISSN: 1089-7798, DOI: 10.1109/LCOMM.2014.2314300 [retrieved on 2014-06-06]
- IAN HORSLEY BT PLC UNITED KINGDOM: "G.VDSL: Immunity of VDSL2 to out of band interference from G.fast;C 1108", ITU-T DRAFT ; STUDY PERIOD 2013-2016, INTERNATIONAL TELECOMMUNICATION UNION, GENEVA ; CH, vol. 4/15, 11 November 2014 (2014-11-11), pages 1-4, XP044075644, [retrieved on 2014-11-11]

## Description

### Technical Field

The present disclosure generally relates to the field of communication lines and more specifically to the coexistence between DSL communication line standards. This typically occurs where a legacy standard is superseded by a new standard. A part of the communication lines then still operate according to the legacy standard while another part operates according to the new standard.

This is for example the case where DSL communication lines operated according to the ADSL(2) or VDSL(2) standard are to be converted to the G.fast standard.

### Background

New Digital Subscriber Line or DSL standards have enabled fast internet access over the traditional telephone line networks. In this field, technology is evolving rapidly and new standards are deployed regularly. Typically, the communication lines are grouped together in large bundles of twisted pairs. Because of this, communication signals on different lines influence each other thereby potentially affecting performance. In the latest VDSL2 standard this cross-talk effect is mitigated by vectoring where the communication signals are pre- or post-compensated.

When a new standard is rolled out on a set of communication lines in such a bundle or in the vicinity of other lines, the same effect may arise in the overlapping frequency bands of both standards. However, the mitigation of the cross-talk between such coexisting standards is not foreseen in the standards. For example, the upcoming G.fast standard may utilize the 2.2MHz to 106 or 202MHz frequency band as specified in ITU-T G.9700 and G.9701. However, the 2.2MHz to 17.7MHz or 30MHz band is overlapping with the VDSL2 frequency band. A known technique to avoid the degradation of the VDSL2 communication lines' performance is to only transmit on G.fast communication lines in the frequency band above VDSL2.

EP2793403A1 discloses a method comprising: i) sending, by one or more processors of a customer premises equipment (CPE) device, a first request message to a domain master (DM) of a network having a plurality of network nodes, the first request message indicating at least one network node of the plurality of network nodes requested to enter a forced probe transmission (FPT) mode, the first request message also indicating a predefined duration during which the indicated at least one network node of the plurality of network nodes is requested to transmit a probe frame when in the FPT mode; and ii) measuring one or more parameters related to a signal transmission channel during a time when the at least one network node of the plurality of network nodes is in the FPT mode.

The publication by HERNAN CORDOVA ET AL: "Towards a compatible Level-2 DSM algorithm to protect downstream multiuser xDSL legacy systems", COMPUTERS AND COMMUNICATIONS (ISCC), 2011 IEEE SYMPOSIUM ON, IEEE, 28 June 2011 (2011-06-28), pages 497-500, discloses pre-Level-2 DSM algorithm to protect legacy xDSL systems from new technology implementations (e.g. VDSL2).

The publication by MAZZENGA FRANCO ET AL: "A Downstream Power Back-Off Procedure for Mixed FTTC and FTTDp Scenarios", IEEE COMMUNICATIONS LETTERS, IEEE SERVICE CENTER, PISCATAWAY, NJ, US, vol. 18, no. 6, 1 June 2014 (2014-06-01), pages 965-968 discloses an architectural solution, which adopts the standard VDSL2 profile in a Fiber-To-The Distributions point (FTTDp).

The publication by IAN HORSLEY BT PC UNITED KINGDOM: "G.VDSL: Immunity of VDSL2 to out of band interference from G.fast; C1108", ITU-T DRAFT; STUDY PERIOD 2013-2016, INTERNATIONAL TELECOMMUNICATION UNION, GENEVA; CH, vol. 4/15, 11 November 2014 (2014-11-11), pages 1-4 discloses a measurement method in order to estimate the out of band susceptibility of VDSL2 DSLAMs and CPEs. The measurement method involves injection of wideband noise (WBNI) into the first alias-band of VDSL2 above 17.664MHz, and measuring the signature of that noise by means of the VDSL2 QLN capability.

### Summary

Although the above solution is simple, the loss in throughput on the G.fast communication lines and the reduction of the reach of the service level is undesirable. Especially because the communication channel exhibits larger attenuations at higher frequencies and the relative loss in data rate is thus higher for longer loops.

It is in an object to alleviate the above shortcoming and to provide faster data rates on communication lines influencing each other by transmitted communication signals according to different standards.

This object is achieved by a device according to claim 1.

The communication standards may be DSL or Digital Subscriber Line communication standards such as for example ADSL, ADSL2, ADSL2+, VDSL, VDSL2 and G.fast whereby the frequency spectrum overlaps in a certain overlapping range. The first standard may be a legacy standard such as VDSL2 and the second standard may be a newly implemented standard such as G.fast gradually replacing the legacy standard. In such a case, the PSD and thus the performance of the newly implemented standard is decreased in the overlapping frequency range in favour of the legacy standard. The other way around is also possible where the PSD and thus the performance of the legacy standard is decreased in the overlapping frequency range in favour of the newly implemented standard.

Influence between communication lines is also referred to as cross talk (XT) or interference. The coupling information may then for example be expressed as the ratio between the interference noise and the total noise; wherein the total noise corresponds to the interference noise together with any other background noise.

Determining an adapted PSD corresponds to defining a PSD mask which limits the power of the transmitted signals partly or completely in the overlapping frequency band to a further degree than what is determined by the actual standard.

It is an advantage that all communication lines can still operate within the overlapping frequency range thereby achieving higher total performance and thus data throughput than in the case where one of sets of communication lines is prohibited to transmit in the overlapping frequency band.

The device may further correspond to a network analyser for measuring and determining a performance of the communication lines.

Such network analysers can typically remotely assess the performance of communication lines and configure them appropriately. This is particularly useful when the communication lines are terminated in different cabinets spatially separated from each other.

According to an embodiment, the measuring coupling information comprises measuring a total noise on the first set of communication lines while the second set of communication lines is active. The measured total noise is then indicative for background noise together with interference noise from the second set.

As performance on the first set of communication lines will be directly influenced by the captured noise, the total measured noise gives a good indication of the performance degradation caused by the interference.

According to a further embodiment, the measuring coupling information further comprises deactivating the second set of communication lines and measuring the background noise.

As there is now a measure of the background noise, the interference noise can be determined independently from the background noise allowing a better estimation of the influence of the second set of lines on the performance of the first lines.

The situation when the first communication signals correspond to first symbols of a predetermined fixed length and the second communication signals correspond to frames of a fixed length further comprising second symbols of a fixed length may occur when the first standard corresponds to the VDSL2 standard and the second standard corresponds to the G.fast standard. In this case, three VDSL2 symbols are 750 microseconds long which is exactly the length of a G.fast frame. By aligning or synchronizing the beginning of a VDSL2 symbol with a G.fast frame, the VDSL2 synchronization symbol will sometimes occur at the beginning of the G.fast frame and sometimes at the end of the G.fast frame. When this occurs, the G.fast download or upload portion is then scheduled such that the synchronization symbols fall within the respective portion.

The advantage of this is that the influence of the G.fast lines can be determined independently for the G.fast downstream and upstream symbols. This allows to further determine the PSD separately for the upstream and downstream G.fast symbols which have different influence or cross-talk characteristic on the VDSL2 lines. Furthermore, all lines can remain active during the measurement. A further advantage is that this can be applied while complying with the G.fast and VDSL2 standard.

The measuring may then further comprise discontinuing operation on the second communication lines for a predetermined number of second symbols during transmission of the synchronization symbol and measuring background noise from this synchronization symbol.

By measuring the background noise separately, a better estimation of the interference noise can be obtained. Furthermore, the G.fast communication standard allows this kind of discontinued operation. Therefore, this embodiment may thus be applied while complying with the G.fast and VDSL2 standard. Also, the communication lines may remain partially active without need for a resynchronization.

In the situation when the second communication signals correspond to second symbols of a predetermined fixed length and the first communication signals correspond to frames of a fixed length further comprising first symbols of a fixed length, the total noise may further be measured from a first synchronization symbol in the upload portion and from a second synchronization symbol in the download portion.

The advantage of this is that the influence of VDLS2 lines on the G.fast lines can be determined independently for the G.fast downstream and upstream symbols. This allows to further determine the PSD separately for the VDSL2 lines during the G.fast upstream and downstream symbols. Furthermore, all lines can again remain active during the measurement. Also here it is an advantage that this can be applied while complying with the G.fast and VDSL2 standard.

According to an embodiment, the estimating the PSD comprises determining a network topology of the communication lines, and determining a subset of the first communication lines not influenced by the second set from this topology, and determining a cut-off frequency in the overlapping frequency range above which only the subset of communication lines operate and above which the PSD is not adapted and corresponds to a maximum PSD allowed by the second standard.

This way, the second standard is allowed to transmit in the overlapping frequency band at maximum power because the lines according to the first standard that operate in this part of the frequency band are not influenced by the second standard. For example, when the distance between a first cabinet from where the first set originates and a second cabinet from where the second set starts and joins the first set is large, the loops originating from the first cabinet but passing the second cabinet observe a signal attenuation on their highest sub-carriers. Those sub-carriers subsequently allow no or little bit loading regardless of the presence of loops using the second standard.

According to an embodiment, when determining the adapted PSD, the influence of the second communication signals according to the adapted PSD is below a target noise PSD. In other words, the PSD mask is chosen such that when transmitting communication signals according to the PSD mask, the influence on the communication lines according to the other standard is not considered as harmful interference as the interference is below the noise level as defined by the other standard. This allows an easy measurement of the performance of the first standards as only the noise level on the communication lines according to the first standard need to be measured. The target noise PSD may depend on the use of vectoring among the first lines according to the first standard. If vectoring is active, the target noise PSD may relate to the background noise. If vectoring is inactive, the target noise PSD may relate to the self-interference among the first lines according to the first standard.

According to an embodiment, the adapted PSD corresponds to a predetermined PSD service profile below a maximum PSD profile determined by said second standard. These predetermined service profiles are typically available in DSL and comprise a PSD profile that works and has been tested before.

Acccording to an embodiment, the adapted PSD is proportional to an anti-aliasing filter attenuation of the first set of communication lines.

This way, the adapted PSD reflects interference resulting from aliasing. Depending on digital filtering characteristics - for example from the sampling frequency - and analogue filtering characteristics - for example from low pass filters -, some transmitted signal below the Nyquist frequency may alias above Nyquist, and some received signal above Nyquist frequency may alias below Nyquist.

According to an embodiment, the measuring, estimating and applying steps are iteratively performed. This way, errors in the determining of the interference and in the estimation of the adapted PSD can be overcome and changes in the interference can be anticipated for.

According to a second aspect, the disclosure relates to the method according to claim 11.

According to a third aspect, the disclosure relates to a computer program product comprising computer-executable instructions for performing the method according to the second aspect when the program is run on a computer.

According to a fourth aspect, the disclosure relates to a computer readable storage medium comprising the computer program product according to the third aspect.

According to a fifth aspect, the disclosure relates to a data processing system programmed for carrying out the method according to the second aspect.

### Brief Description of the Drawings

Fig. 1 illustrates a network access topology with communication lines configured according to a first and second communication standard according to an embodiment; and
Fig. 2 illustrates a Power Spectral Density mask for communication signals according to the G.Fast communication standards according to an embodiment; and
Fig. 3 illustrates steps performed in a network analyser for optimizing the coexistence between communication standards according to an embodiment; and
Fig. 4 shows data rates obtained on communication lines configured according to embodiments; and
Fig. 5 shows portions of downstream data rates below a cut-off frequency and portions of data rate above a cut-off frequency for communication lines configured according to embodiments; and
Fig. 6 shows portions of upstream data rates below a cut-off frequency and portions of upstream data rates above a cut-off frequency for communication lines configured according to embodiments; and
Fig. 7 shows a computing system for optimizing the coexistence between different communication standards according to an embodiment; and
Fig. 8 shows steps for measuring coupling information between VDSL2 and G.fast communication lines according to an embodiment; and
Fig. 9 illustrates cross talk from G.fast data frames to VDSL2 synchronization symbols that are synchronized according to an embodiment; and
Fig. 10 illustrates the avoidance of cross talk from G.fast data frames to VDSL2 synchronization symbols in order to measure background noise; and
Fig. 11 illustrates cross talk from VDSL2 data symbols to G.fast synchronization symbols; and

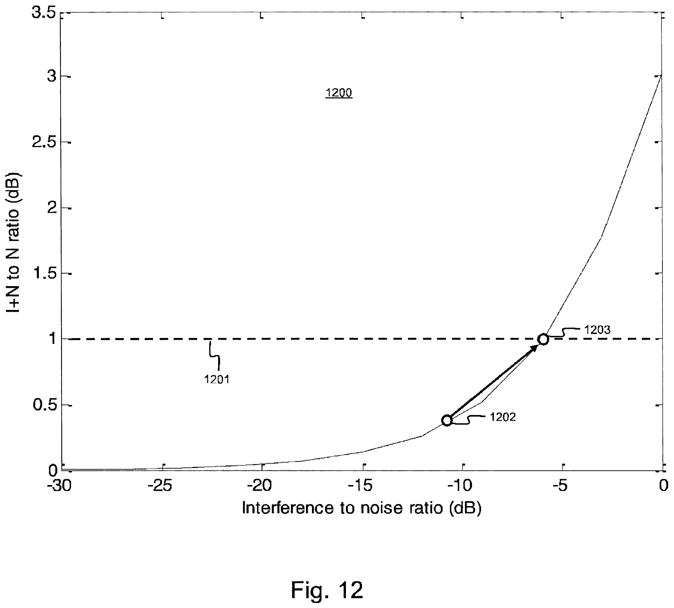

Fig. 12 illustrates the noise characteristic of a communication line and how to determine an adapted Power Spectral Density therefrom.

### Detailed Description of Embodiment(s)

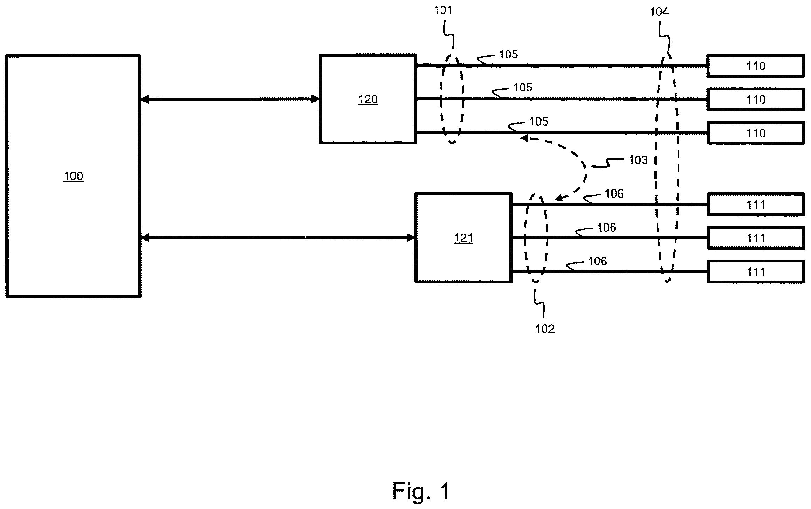

The disclosure relates to the coexistence of standards in access networks delivering network access towards end user premises. An access network is illustrated in Fig. 1 where network access is delivered to the end user premises 110, 111 by Digital Subscriber Lines 105, 106 also referred to as DSL lines. Such DSL lines may physically correspond to twisted pair copper lines, typically originating from the time they were used for the public switched telephone network. Such communication lines 105, 106 are laid down closely to each other, typically as part of a bundle 104. Because of this close spatial relationship, communication signals sent over one line may influence communication signals sent over other lines in the form of noise. This effect is also referred to as cross-talk or interference whereby the communication channel caused by the interference is referred to as an interference channel.

One set 101 of the communication lines is operated or intended to be operated according to a first legacy communication line standard. Such a legacy communication standard may for example be the VDSL2 standard as defined in ITU-T G.993.2. Within the VDSL2 operated communication lines, influence of communication signals on other lines within the set 101 may be further mitigated by vectoring according to the ITU-T G.993.5 standard. The first set 101 of communication lines is terminated in the cabinet 120. The VDSL2 standard typically operates in a frequency band in the range of 138KHz up to 17.6MHz.

A second set 102 of the communication lines 106 is operated or intended to be operated according to a second communication line standard. The frequency range of the communication signals according to this second standard thereby overlaps with the frequency range of the first communication standard. In the example of Fig. 1, the first set 101 of lines is terminated in cabinet 121. The second communication standard may for example be the upcoming G.fast standard for which formal specifications have been drafted as ITU-T G.9700 and G.9701. G.fast operates in a much wider bandwidth that can start from 2.2MHz and range up to 212MHz. Due to the higher frequency ranges in G.fast operation is guaranteed for loops up to 250 meters while VDSL2 guarantees operation for loops up to 2500 meters. Therefore, the cabinet 121 will typically be positioned closer to the user premises 111 than cabinet 120.

The disclosure relates to optimizing the coexistence of the first and second standard by autonomously configuring the frequency separation between the first and second standard in order to minimize the impact in performance by the two standards. For the embodiments below, the VDSL2 and G.fast standard will be used, but the same principle may also be applied to other overlapping standards.

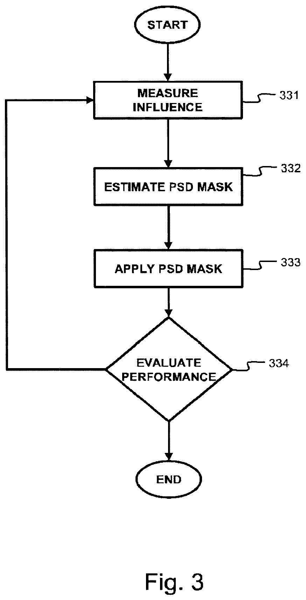

This optimization process is illustrated by the functional flow diagram in Fig. 3 according to an embodiment. In a first step 331, the influence of communication signals of the first set 101 on the communication signals of the second set 102 is determined or the other way around, from the second set 102 on the first set 101. In other words, coupling information is determined indicative for an influence or interference 103 of second communication signals sent over the second set 102 on first communication signals sent over the first set 101.

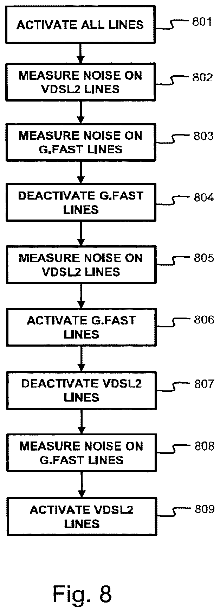

According to an embodiment, the measuring according to step 331 is done by performing the steps illustrated In Fig. 8. In the first step 801, all lines, i.e. both G.fast and VDSL2 lines, are activated. Then, in step 802, the noise on the VDSL2 lines is measured. As the G.fast lines are all active, the total measured noise will be indicative for a combination of the interference noise from the G.fast lines and the background noise originating from other sources. Optionally, in step 803, the noise on the G.fast lines is then measured in the same way. As the VDSL2 lines are active, the total measured noise will be indicative for the interference noise form the VDSL2 lines together with the background noise originating from other sources. By modifying the ratio between downstream (902) and upstream (904) transmission in G.fast, a distinction can be made between the interference from downstream G.fast transmission and upstream G.fast transmission. Likewise, by modifying the size of the Normal Operation Interval versus the length of the Discontinuous Operation Interval, a distinction can be made between interference and background noise.

In the next step 804, all G.fast lines are deactivated, i.e., no signals are sent over the G.fast lines. Then, in step 805, another noise measurement is performed on the VDSL2 lines. As all G.fast lines are inactive and interference noise from within the VDSL2 lines is mitigated by vectoring, the measured nose will correspond to the background noise. In step 806, the G.fast lines are activated again and both the G.fast and VDSL2 line can continue normal operation. Now that the background noise on the VDSL2 lines and the combination of the background noise and the interference noise from the G.fast lines on the VDSL2 lines is known, the interference noise caused by the G.fast lines can be obtained.

Assuming reciprocity of the interference channels, the interference noise from the VDSL2 lines to the G.fast lines can then be calculated. Alternatively, this interference noise can also be measured as illustrated by the steps 807 to 809 in Fig. 8. In Step 807, the VDSL2 lines are deactivated. In step 808, the total noise on the G.fast lines is then measured, i.e., the interference noise from the VDSL2 lines together with the background noise. With this measurement together with the measurement in step 803, the interference noise from the VDSL2 lines can then be obtained. In the last step 809, the VDSL2 lines are then again activated and normal operation can be resumed.

All steps according to Fig. 8 can be performed remotely in the Central Office or CO of the network access provider, or on a server in a Network Operation Center. These steps can be part of network analyser logic or software implemented on a computing system located in the CO. In order to perform all the steps of Fig. 8, the network analyser communicates with the Digital subscriber Line Access Multiplexer or DSLAM in the cabinets 120, 121. As this measurement method involves the activation and deactivation of the lines, the steps are preferably performed at night when network traffic is low. These measurements may for example be combined with the configuration and reconfiguration of the communication lines as typically performed on the DSL communication lines.

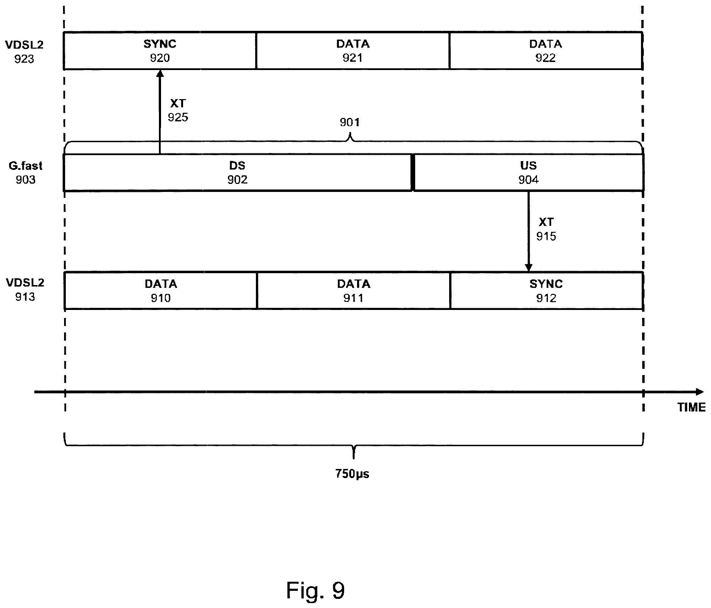

According to an embodiment, the measuring step 331 is performed in an alternative way. During the initialization of the lines, the symbols of the VDSL2 and G.fast lines are synchronized. This is illustrated in Fig. 9 where a G.fast data stream 903 and two VDSL2 data streams 913 and 923 are represented during a 750 microsecond time window. In G.fast, a frame 901 can be configured to have a duration of 750 microseconds comprising 36 symbols. As G.fast schedules upstream and downstream data according to a Time Division Duplex or TDD scheme, a first set 902 of the symbols carries downstream data and a second set 904 carries the upstream data. The amount of symbols used for the upstream and downstream data thereby depends on the amount of data traffic. In VDSL2, the symbols 920, 921, 922, 910, 911, 912 are 250 microseconds long and once per 257 symbols, a synchronization or sync symbol 920, 912 is sent over the communication lines. This sync symbols allow measuring the cross-talk between the different VDSL2 communication lines.

As illustrated by Fig. 9, by the synchronization of the VDSL2 and G.fast lines, a G.fast frame starts at the same time as a VDS2 symbol. Because of this, during operation the sync symbols 920 and 912 will sometimes start together with the downstream portion 902 of the G.fast data frame 901 and sometimes end together with the upstream data portion 904 of the G.fast data frame. This then allows measuring separately the interference noise from both the downstream data portion 902 and the upstream data portion 904 into the VDSL2 communication lines.

For measuring the interference noise 925 from the downstream portion 902 of the G.fast data stream 903, samples from the received sync symbol 920 that are not affected by cross-talk from other VDSL2 lines are correlated with a pilot sequence in order to obtain the total noise from the G.fast communication lines. This way the combination of background noise and interference noise caused by downstream data from the G.fast communication lines is obtained.

For measuring the interference noise 915 from the upstream portion 904 of the G.fast data stream 903, samples from the received sync symbol 912 that are not affected by cross-talk from other VDSL2 lines are correlated with a pilot sequence in order to obtain the total noise from the G.fast communication lines. This way the combination of background noise and interference noise caused by upstream data from the G.fast communication lines is obtained.

The advantage of measuring the interference noise according to the embodiment of Fig. 9 is that a more precise measurement is obtained as upstream and downstream data may affect the VDSL2 communication lines differently. The Power Spectral Density or PSD of the G.fast lines may then be adapted differently for the upstream and downstream data traffic.

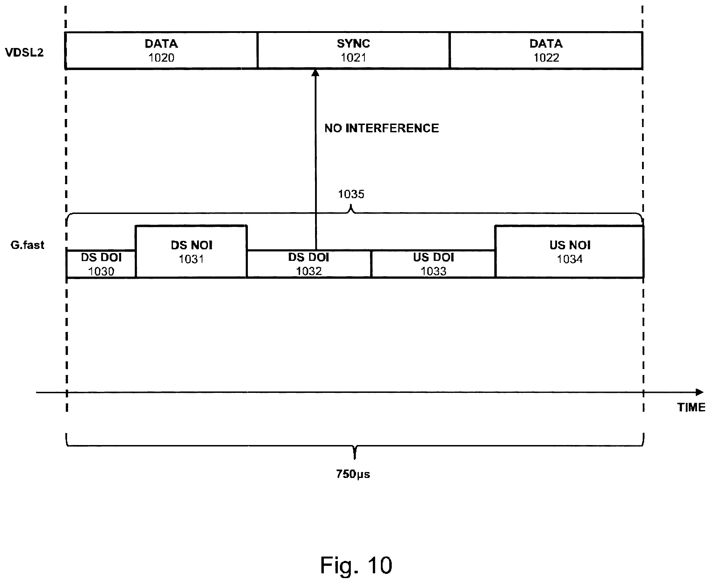

The measurement of the background noise may then further be performed according to step 805 of Fig. 8. Alternatively, the background noise may also be measured while both VDSL2 and G.fast lines are active, i.e., during showtime. This is done according to the scheme represented in Fig. 10. Similar to Fig. 9, the G.fast frames 1035 and VDSL2 symbols 1020, 1021, 1022 are synchronized. Therefore, it is known during which G.fast frames, a sync symbol 1021 is sent over the VDSL2 communication lines. Then, during the sync symbol 1021, the G.fast frame 1035 is configured not to transmit any data during the sync frame 1021. This way, the sync frame is only affected by background noise and interference noise from the VDSL2 communication lines. Then again, by correlating error samples obtained from the received sync symbol 1021 that are not affect by interference from the other VDSL2 lines with the appropriate pilot sequence a measure of the background noise is obtained.

In order to configure the G.fast frame 1035 appropriately, use can be made of the Normal Operation Interval or NOI and Discontinuous Operation Interval or DOI available in G.fast. During the DS or downstream NOI 1031 and the US or upstream NOI 1034 respectively downstream and upstream data is modulated onto the symbols. On the other hand, during the DS or downstream DOI 1030, 1032 and the US or upstream DOI 1033 no respective downstream or upstream signals are sent over the G.fast communication lines.

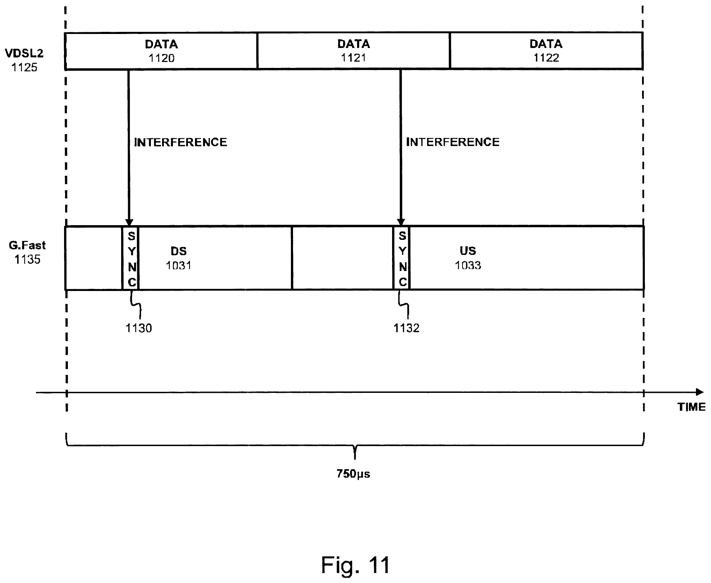

The other way around, also the interference of the VDSL2 communication lines on the G.fast communication lines may be measured as illustrated by Fig. 11. In this case, the interference of the VDSL2 signal 1125 comprising data symbols 1120, 1121 and 1122 is measured from the synchronization symbols 1130 and 1132 in respectively the downstream time interval 1131 and upstream time interval 1133 of a G.fast data frame 1135.

Referring back to Fig. 3, when the interference or influence from one set of communication lines into the other is measured, in the second step 332, an adapted Power Spectral Density or PSD for the communication signals according to the first or second standard is estimated from the measurements in step 331. This may be done by choosing a PSD for the communication signals on the second set 102 that do not result in a performance degradation of the communication signals in the first set 101. According to a further embodiment, the PSD for the second set 102 is chosen such that the signal noise introduced on the first set 101 by the second set 102 is below a target noise level, e.g. below a noise level in order to guarantee a predetermined data rate on the communication lines 105 of the first set 101. This noise level may for example be obtained from the first standard itself.

This is further illustrated in Fig. 11. In the graph 1200, the ratio between the measured interference noise and the background noise is plotted against the ratio of the total noise and the background noise, both in dB. The line 1201 indicates the maximum tolerable noise level on the communication lines, while the measured interference is indicated by the point 1202. The allowed increase in power and thus in PSD is then determined as by how much the point may shift until it reaches the maximum noise level 1201, i.e., until it reaches point 1203.

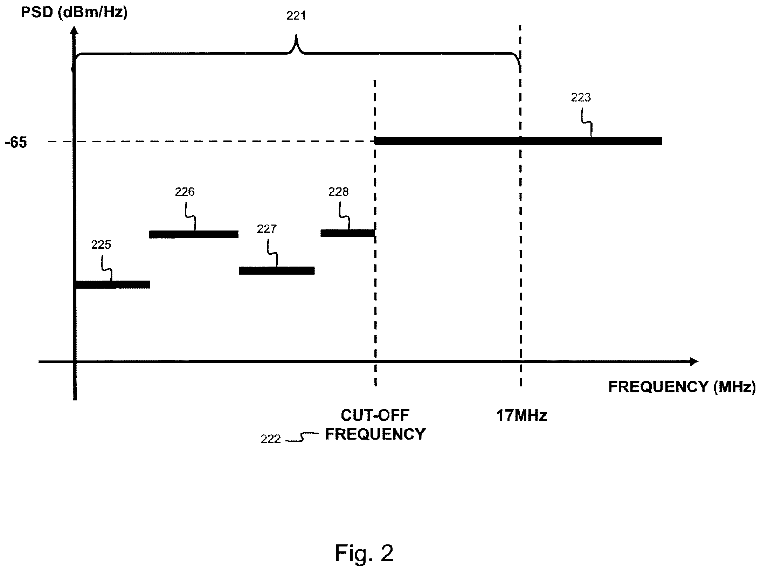

Fig. 2 illustrates an adapted PSD mask for communication signals transmitted over the second set 102 of communication lines according to the G.fast communication standard. The curve shows the maximum PSD expressed in dBm per Hz as a function of the frequency of the communication signal expressed in MHz. The first set 101 of communication lines is operated according to the VDSL2 standard and the overlapping frequency range 221 is from 2.2MHz to 17MHz. Instead of limiting the G.fast communication signals to frequencies above 17MHz, the methodology according to the above embodiments and Fig. 2 is applied and an adapted PSD mask is obtained for the transmitted G.fast communication signals. A cut-off frequency 222 is also defined above which the G.fast communication signals are not masked, i.e., their PSD is limited by the maximum PSD allowed by the G.fast standard which is -65dBm. Below the cut-off frequency 222, different maximum power levels 225-228 are obtained dependent on the frequency band of the transmitted G.fast communication signal. Although graphically represented as horizontal lines in Fig. 2, the PSD levels 225-228 in each band may be frequency dependent.

The cut-off frequency 222 does not necessarily have to coincide with the border of the overlapping frequency range 221 and may be moved into the overlapping range. A first reason to do so, is that a part of the VDSL2 frequency band is sacrificed in favour of G.fast. This may be done according to the bitloading or Signal to Noise Ratio (SNR) of the higher frequency VDSL2 tones. For example, when only 1-bit constellations are possible on some higher frequency tones, these may be given up and the G.fast PSD is not lowered for these tones, i.e., the cut-off frequency is lowered.

A second reason for lowering the cut-off frequency may be the network topology. As shown in Fig. 1, the G.fast lines 106 are sometimes terminated closer to the user premises 111 then the VDSL2 lines 105. Therefore, some VDSL2 lines leaving the VDSL2 cabinet 120 may already be terminated at a user premises before joining the G.fast communication lines. When determining the cut-off frequency, these earlier terminated lines should not be taken into account as they will not suffer from interference from the G.fast communication lines. In this case, it may occur that some VDSL2 lines operate above the cut-off frequency but do not suffer from the interference.

According to the third step 333, the estimated PSD is then applied to the second set 102 of communication lines. When applying the PSD to G.fast line, this can be done by a re-initialization of the line which interrupts the operation of the line. This may also be done during operation, i.e., at showtime, by using the Transmitter Initiated Gain Adaptation or TIGA for adapting the downstream PSD. For adapting the upstream PSD, the gain adaptation functionality provided by the SRA or Seamless Rate Adaptation may be used. When applying the PSD to a VDSL2 line, the same principles as for G.fast can be used for upstream, but for downstream a re-initialization of the line may be necessary. An alternative for downstream re-initialization is adaptation of transmit gains in the modems 120, sufficiently slow for the receivers of 110 to adjust their frequency equalizer.

Optionally, the performance of the first set 101 on communication lines may then be evaluated in the step 334. This may for example be done by measuring the performance and comparing it with the performance before the adapted PSD. It may then be decided to iterate the three steps 331, 332 and 333 in order to get a better performance of one or both of the sets 101, 102. When obtaining the PSD in an iterative way, predetermined PSD service profiles may be used in step 332.

Optionally, predetermined PSD service profiles may also be applied to the first set 101 of communication lines. These PSD profiles define a PSD mask in the overlapping frequency range which is lower than the maximum allowed power by the first standard but still allow getting a targeted data rate. This further enables the second set 102 of communication lines to achieve higher data rates.

Due to aliasing, the transmitters (120, 110) may unintentionally create interference above the border of the overlapping frequency range 221. Likewise, the receivers (120, 100) may alias interference received above frequency range 221 into frequency range 221. The amount of aliasing depends on the filter characteristics of the transmitters and receivers of (120, 110). According to an embodiment, the PSD 223 is lowered near the border of the overlapping frequency range 221 to reduce the interference that is aliased into the receivers (120, 100). The shape in frequency of this PSD reduction may be selected to be proportional to the attenuation caused by the anti-aliasing filter. In this way, the aliased interference can be brought closer to the target noise PSD. The anti-aliasing filter attenuation is typically zero well below the Nyquist frequency (the signal passes the filter) and is typically large well above the Nyquist frequency (the signal is filtered out). In a transition region near the Nyquist frequency, the anti-aliasing filter attenuation typically has a larger frequency dependency going from zero to a large value.

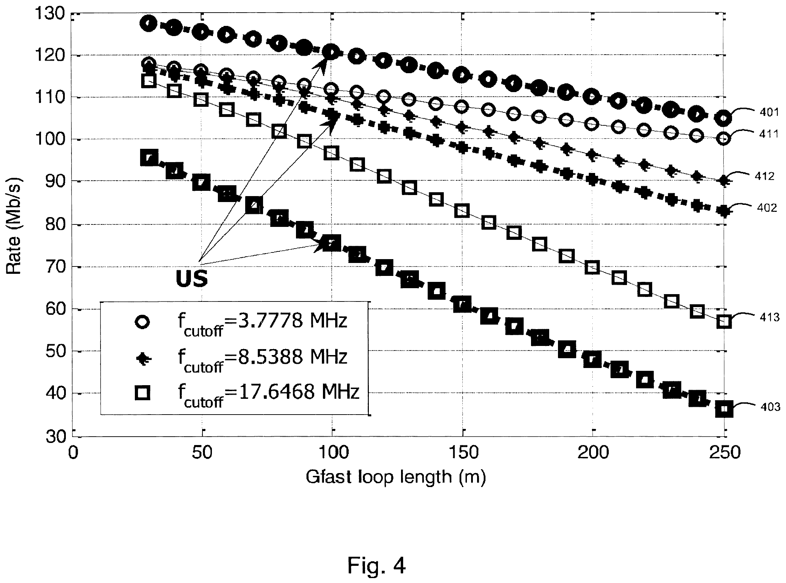

Fig. 4, 5 and 6 show results of the application of a PSD mask on G.Fast communication lines where the distance between the cabinets 120 and 121 is 600 meters. In Fig. 4 the achieved data rate in the overlapping band is plotted in Mbits per seconds against the loop length of the G.Fast communication line. Curves 401, 402 and 403 shown the upstream data rate for a cut-off frequency of respectively 3.7778MHz, 8.5388MHz and 17.6468MHz. Curves 411,412 and 413 then show the downstream data rate for the respective same cut-off frequencies. From Fig. 4 it can be seen that there is a considerable gain in data rate by applying the proposed PSD shaping, even in the worst case where the cut-off frequency is at its highest value.

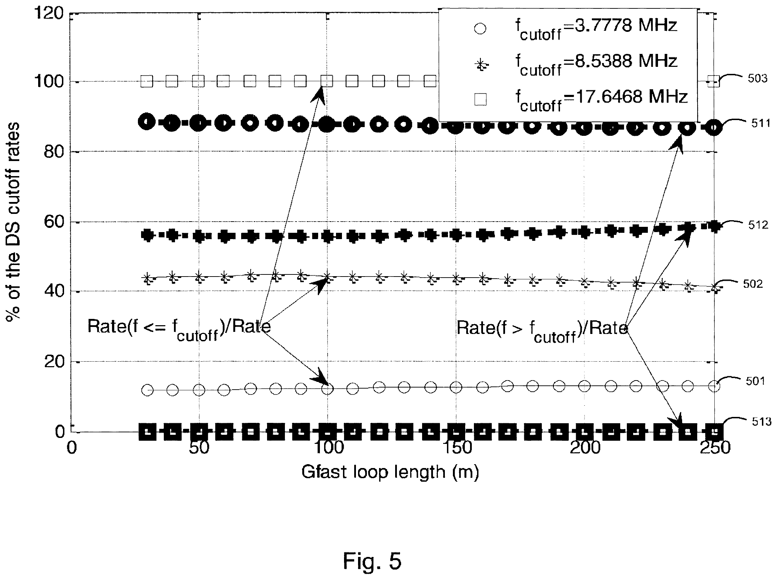

Curves 501, 502 and 503 of Fig. 5 illustrate the portion in percentages of the total downstream data rate in the overlapping band that is achieved below the cut-off frequency for again a cut-off frequency of respectively 3.7778MHz, 8.5388MHz and 17.6468MHz. Curves 511, 512 and 513 illustrate the opposite case, i.e., the portion in percentages of the total downstream data rate that is achieved above the cut-off frequency for the same cut-off frequency of respectively 3.7778MHz, 8.5388MHz and 17.6468MHz.

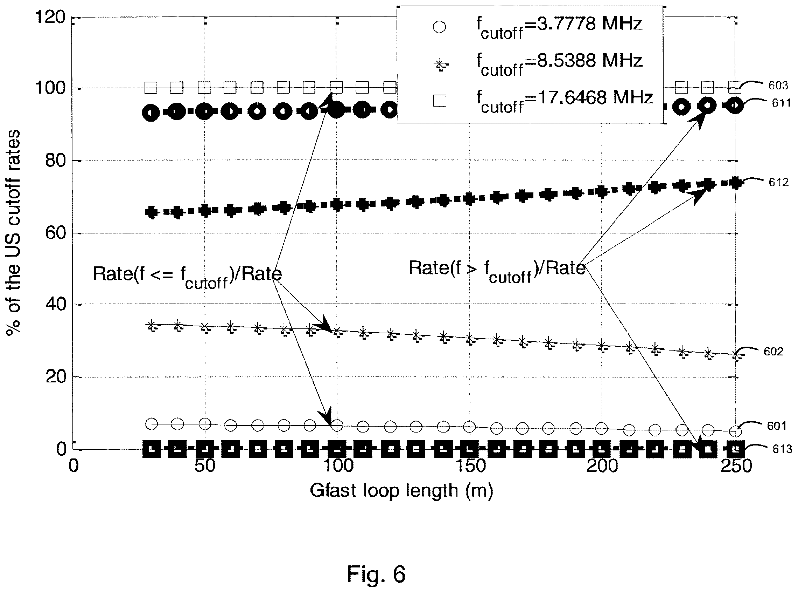

Curves 601, 602 and 603 of Fig. 6 illustrate the portion in percentages of the total upstream data rate that is achieved below the cut-off frequency for again a cut-off frequency of respectively 3.7778MHz, 8.5388MHz and 17.6468MHz. Curves 611, 612 and 613 illustrate the opposite case, i.e., the portion in percentages of the total upstream data rate that is achieved above the cut-off frequency for the same cut-off frequency of respectively 3.7778MHz, 8.5388MHz and 17.6468MHz.

For a moderate cut-off frequency, the downstream rate due to PSD shaping and transmission above the cut-off frequency are comparable as shown in Fig. 5. In upstream, as shown in Fig. 6, the rate due to PSD shaping is relatively lower. For example, for a cut-off frequency of 8.5MHz more than 60% of the rate comes from the transmission above the cut-off frequency.

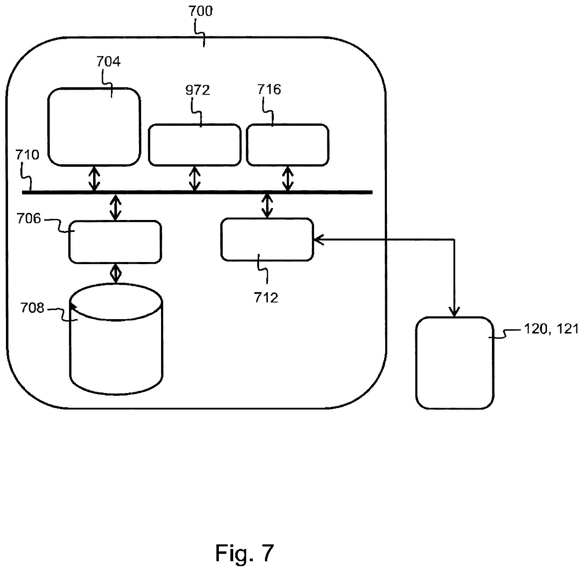

Fig. 7 shows a suitable computing system 700 as a further embodiment of the device 100 for performing the steps illustrated by Fig 3. Computing system 700 may in general be formed as a suitable general purpose computer and comprise a bus 710, a processor 702, a local memory 704, one or more optional input interfaces 714, one or more optional output interfaces 716, a communication interface 712, a storage element interface 706 and one or more storage elements 708. Bus 710 may comprise one or more conductors that permit communication among the components of the computing system 700. Processor 702 may include any type of conventional processor or microprocessor that interprets and executes programming instructions. Local memory 704 may include a random access memory (RAM) or another type of dynamic storage device that stores information and instructions for execution by processor 702 and/or a read only memory (ROM) or another type of static storage device that stores static information and instructions for use by processor 702. Communication interface 712 may comprise any transceiver-like mechanism such as for example one or more Ethernet interfaces that enables computing system 700 to communicate with other devices and/or systems. The communication interface 712 of computing system 700 may be connected to such another computing system by means of a local area network (LAN) or a wide area network (WAN) such as for example the internet. Storage element interface 706 may comprise a storage interface such as for example a Serial Advanced Technology Attachment (SATA) interface or a Small Computer System Interface (SCSI) for connecting bus 710 to one or more storage elements 708, such as one or more local disks, for example SATA disk drives, and control the reading and writing of data to and/or from these storage elements 708. Although the storage elements 708 above is described as a local disk, in general any other suitable computer-readable media such as a removable magnetic disk, optical storage media such as a CD or DVD, -ROM disk, solid state drives, flash memory cards... could be used. The system 700 described above can also run as a Virtual Machine above the physical hardware.

The steps illustrated by the above embodiments may be implemented as programming instructions stored in local memory 704 of the computing system 700 for execution by its processor 702. Alternatively the instructions may be stored on the storage element 708 or be accessible from another computing system through the communication interface 712.

The system 700 may be connected to the cabinets 120, 121 by its communication bus 710. This way the system 700 can obtain information and measurements from the communication lines 105, 106 and apply the obtained PSD mask to the second set 102 of communication lines.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A device (100) for optimizing coexistence between communication signals sent over communication lines (101, 102); wherein a first set (101) of said communication lines is configured to interoperate according to a first communication standard in a first frequency range; and wherein a second set (102) of said communication lines is configured to interoperate according to a second communication standard operating in a second frequency range overlapping (221) with said first frequency range; said device being configured to perform the following steps:
- measuring (331) coupling information indicative for an influence (103) of second communication signals sent over said second set (102) on first communication signals sent over said first set (101); and
- estimating (332) from said coupling information an adapted Power Spectral Density or PSD for said second communication signals in said overlapping frequency range (221) such that said influence from said second communication signals is within a predetermined tolerance level (1201); and
- applying (333) said adapted PSD to communication signals sent over said second set;
**characterized in that**
- said first communication signals correspond to first symbols (920, 921, 922, 910, 911, 912) of a predetermined fixed length; and wherein said second communication signals correspond to frames (901) of a fixed length further comprising second symbols of a fixed length; and wherein a frame (901) is divided over time in an upload portion (904) of said second symbols and a download portion (902) of said second symbols; and wherein a length of said frame (901) corresponds to a length of an integer amount of said first symbols (920, 921, 922, 910, 911, 912); and wherein a beginning of said frames is synchronized with a beginning of said first symbols; and wherein said measuring (331) further comprises measuring total noise from a synchronization symbol (920, 912) in said first symbols when said synchronization symbol falls completely within said upload (904) or within said download (902) portion thereby obtaining a separate total noise measure for said upload and download portion respectively; or
- said second communication signals correspond to second symbols (1120, 1121, 1122) of a predetermined fixed length; and wherein said first communication signals correspond to frames (1135) of a fixed length further comprising first symbols of a fixed length; and wherein a frame (1135) is divided over time in an upload portion (1033) of said first symbols and a download portion (1031) of said first symbols; and wherein a length of said frame corresponds to a length of an integer amount of said second symbols (1120, 1121, 1122); and wherein a beginning of said frames is synchronized with a beginning of said second symbols; and wherein said measuring (331) further comprises measuring total noise from a synchronization symbol (1130, 1132) in said first symbols thereby obtaining a total noise measure indicative for background noise together with interference noise from said second set.

2. A device (100) according to claim 1 wherein said measuring (331) coupling information comprises measuring (802, 803) a total noise on said first set of communication lines while said second set of communication lines is active; wherein said total noise is indicative for background noise together with interference noise from said second set.

3. A device (100) according to claim 2 wherein said measuring (331) coupling information further comprises deactivating (804, 807) said second set of communication lines and measuring (805, 808) said background noise.

4. A device (100) according to claim 1 wherein said measuring (331) further comprises discontinuing operation on said second communication lines for a predetermined number of second symbols (1032, 1033) during transmission of said synchronization symbol (1021); and measuring background noise from said synchronization symbol (1021).

5. A device (100) according to claim 1 wherein said total noise is measured from a first synchronization symbol (1132) in said upload portion (1033) and from a second synchronization (1130) symbol in said download portion (1031).

6. A device (100) according to claim 1 wherein said estimating (332) said PSD comprises determining a network topology of said communication lines, and determining a subset of said first communication lines not influenced by said second set from said topology, and determining a cut-off frequency (222) in said overlapping frequency range (221) above which only said subset of communication lines operate and above which said PSD is not adapted and corresponds to a maximum PSD (223) allowed by said second standard.

7. A device (100) according to claim 1 wherein said influence of said second communication signals according to said adapted PSD is below a target PSD noise.

8. A device (100) according to claim 1 wherein said adapted PSD corresponds to a predetermined PSD service profile below a maximum PSD profile determined by said second standard.

9. A device (100) according to claim 1 wherein said adapted PSD is proportional to an anti-aliasing filter attenuation of said first set of communication lines (101).

10. A device (100) according to claim 1 further configured to iteratively perform said measuring (331), estimating (332) and applying (333) steps.

11. A method for optimizing coexistence between communication signals on communication lines (105, 106); wherein a first set of said communication lines (105) is configured to interoperate according to a first communication standard in a first frequency range; and wherein a second set of said communication lines (106) is configured to interoperate according to a second communication standard operating in a second frequency range overlapping with said first frequency range; said method comprising the following steps:
- measuring (331) coupling information indicative for an influence of first communication signals sent over said first set on second communication signals sent over said second set; and
- estimating (332) from said coupling information an adapted Power Spectral Density or PSD for said second communication signals in said overlapping frequency range such that said influence from said second communication signals is within a predetermined tolerance level (1201) ; and
- applying (333) said adapted PSD to communication signals sent over said second set;
and wherein:
- said first communication signals correspond to first symbols (920, 921, 922, 910, 911, 912) of a predetermined fixed length; and wherein said second communication signals correspond to frames (901) of a fixed length further comprising second symbols of a fixed length; and wherein a frame (901) is divided over time in an upload portion (904) of said second symbols and a download portion (902) of said second symbols; and wherein a length of said frame (901) corresponds to a length of an integer amount of said first symbols (920, 921, 922, 910, 911, 912); and wherein a beginning of said frames is synchronized with a beginning of said first symbols; and wherein said measuring (331) further comprises measuring total noise from a synchronization symbol (920, 912) in said first symbols when said synchronization symbol falls completely within said upload (904) or within said download (902) portion thereby obtaining a separate total noise measure for said upload and download portion respectively; or
- said second communication signals correspond to second symbols (1120, 1121, 1122) of a predetermined fixed length; and wherein said first communication signals correspond to frames (1135) of a fixed length further comprising first symbols of a fixed length; and wherein a frame (1135) is divided over time in an upload portion (1033) of said first symbols and a download portion (1031) of said first symbols; and wherein a length of said frame corresponds to a length of an integer amount of said second symbols (1120, 1121, 1122); and wherein a beginning of said frames is synchronized with a beginning of said second symbols; and wherein said measuring (331) further comprises measuring total noise from a synchronization symbol (1130, 1132) in said first symbols thereby obtaining a total noise measure indicative for background noise together with interference noise from said second set.

12. A computer program product comprising computer-executable instructions for performing the method according to claim 11 when the program is run on a computer.

13. A computer readable storage medium comprising the computer program product according to claim 12.

## Patentansprüche

1. Vorrichtung (100) zum Optimieren der Koexistenz zwischen Kommunikationssignalen, die über Kommunikationsleitungen (101, 102) gesendet wurden; wobei ein erster Satz (101) besagter Kommunikationsleitungen konfiguriert ist zum Interagieren gemäß einem ersten Kommunikationsstandard in einem ersten Frequenzbereich; und wobei ein zweiter Satz (102) von besagten Kommunikationsleitungen konfiguriert ist zum Interagieren gemäß einem zweiten Kommunikationsstandard in einem zweiten Frequenzbereich, der mit besagtem ersten Frequenzbereich überlappt (221); wobei besagte Vorrichtung konfiguriert ist zum Durchführen der folgenden Schritte:
- Messen (331) von Kopplungsinformation, die indikativ ist für einen Einfluss (103) von zweiten Kommunikationssignalen, die über besagten zweiten Satz (102) gesendet worden sind, auf erste Kommunikationssignale, die über besagten ersten Satz (101) gesendet wurden; und
- Abschätzen (332) aus besagter Kopplungsinformation einer angepassten Sendeleistungsdichte oder PSD für besagte zweite Kommunikationssignale in besagtem überlappenden Frequenzbereich (221), sodass besagter Einfluss von besagten zweiten Kommunikationssignalen innerhalb eines vorbestimmten Toleranzbereichs (1201) liegt; und
- Anwenden (333) besagter angepasster PSD auf Kommunikationssignale, die über besagten zweiten Satz gesendet worden sind;
**dadurch gekennzeichnet, dass**
- besagte erste Kommunikationssignale ersten Symbolen (920, 921, 922, 910, 911, 912) einer vorbestimmten festen Länge entsprechen; und wobei besagte zweite Kommunikationssignale Rahmen (901) einer festen Länge entsprechen, weiterhin umfassend zweite Symbole einer festen Länge; und wobei ein Rahmen (901) mit der Zeit unterteilt wird in einen Upload-Teil (904) besagter zweiter Symbole und in einen Download-Teil (902) besagter zweiter Symbole; und wobei eine Länge von besagtem Rahmen (901) einer Länge eines ganzzahligen Betrags besagter erster Symbole (920, 921, 922, 910, 911, 912) entspricht; und wobei ein Beginn besagter Rahmen synchronisiert ist mit einem Beginn besagter erster Symbole; und wobei besagte Messung (331) weiterhin umfasst das Messen des gesamten Rauschens von einem Synchronisationssymbol (920, 912) in besagten ersten Symbolen, wenn besagtes Synchronisationssymbol vollständig in besagten Upload-Teil (904) oder in besagten Download-Teil (902) fällt unter Erhalten einer separaten Messung des Gesamtrauschens jeweils für besagten Upload-Teil und Download-Teil; oder
- besagte zweite Kommunikationssignale zweiten Symbolen (1120, 1121, 1122) einer vorbestimmten festen Länge entsprechen; und wobei besagte erste Kommunikationssignale Rahmen (1135) einer festen Länge entsprechen, weiterhin umfassend erste Symbole einer festen Länge; und wobei ein Rahmen (1135) mit der Zeit unterteilt wird in einen Upload-Teil (1033) besagter erster Symbole und in einen Download-Teil (1031) besagter erster Symbole; und wobei eine Länge von besagtem Rahmen einer Länge eines ganzzahligen Betrags besagter zweiter Symbole (1120, 1121, 1122) entspricht; und wobei ein Beginn besagter Rahmen synchronisiert ist mit einem Beginn besagter zweiter Symbole; und wobei besagte Messung (331) weiterhin umfasst das Messen des Gesamtrauschens von einem Synchronisationssymbol (1130, 1132) in besagten ersten Symbolen unter Erhalten einer Messung des Gesamtrauschens, das indikativ ist für das Hintergrundrauschen zusammen mit Störrauschen von besagtem zweiten Satz.

2. Vorrichtung (100) nach Anspruch 1, wobei besagte Messung (331) der Kopplungsinformation das Messen (802, 803) eines Gesamtrauschens an besagtem ersten Satz von Kommunikationsleitungen umfasst, während besagter zweiter Satz von Kommunikationsleitungen aktiv ist; wobei besagtes Gesamtrauschen indikativ ist für das Hintergrundrauschen zusammen mit Störrauschen von besagtem zweiten Satz.

3. Vorrichtung (100) nach Anspruch 2, wobei besagte Messung (331) von Kopplungsinformation weiterhin umfasst das Deaktivieren (804, 807) besagten zweiten Satzes von Kommunikationsleitungen und Messen (805, 808) besagten Hintergrundrauschens.

4. Vorrichtung (100) nach Anspruch 1, wobei besagte Messung (331) weiterhin umfasst das Unterbrechen besagter Operation an besagten zweiten Kommunikationsleitungen für eine vorbestimmte Anzahl von zweiten Symbolen (1032, 1033) während der Übertragung von besagtem Synchronisationssymbol (1021); und Messen des Hintergrundrauschens von besagtem Synchronisationssymbol (1021).

5. Vorrichtung (100) nach Anspruch 1, wobei besagtes Gesamtrauschen gemessen wird von einem ersten Synchronisationssymbol (1132) in besagtem Upload-Teil (1033) und von einem zweiten Synchronisationssymbol (1130) in besagtem Download-Teil (1031).

6. Vorrichtung (100) nach Anspruch 1, wobei besagtes Schätzen (332) besagter PSD umfasst das Bestimmen einer Netzwerktopologie besagter Kommunikationsleitungen, und Bestimmen eines Untersatzes besagter erster Kommunikationsleitungen, die nicht beeinflusst werden von besagtem zweiten Satz von besagter Topologie, und Bestimmen einer Cut-off-Frequenz (222) in besagtem überlappenden Frequenzbereich (221) oberhalb derer nur besagter Untersatz von Kommunikationsleitungen betrieben wird und oberhalb derer besagte PSD nicht angepasst ist und einer maximalen PSD (223) entspricht, die von besagtem zweiten Standard erlaubt ist.

7. Vorrichtung (100) nach Anspruch 1, wobei besagter Einfluss besagter zweiter Kommunikationssignale gemäß besagter angepassten PSD unter einem Ziel-PSD-Rauschen liegt.

8. Vorrichtung (100) nach Anspruch 1, wobei besagte angepasste PSD einem vorbestimmten PSD-Serviceprofil unterhalb eines maximalen PSD-Profils entspricht, das von besagtem zweiten Standard bestimmt wird.

9. Vorrichtung (100) nach Anspruch 1, wobei besagte angepasste PSD proportional ist zu einer Anti-Aliasing-Filterdämpfung von besagtem ersten Satz von Kommunikationsleitungen (101).

10. Vorrichtung (100) nach Anspruch 1, weiterhin konfiguriert zum iterativen Durchführen besagter Messungs- (331), Schätzungs- (332) und Anwendungsschritte (333).

11. Verfahren zum Optimieren der Koexistenz zwischen Kommunikationssignalen an Kommunikationsleitungen (105, 106); wobei ein erster Satz besagter Kommunikationsleitungen (105) konfiguriert ist zum Interagieren gemäß einem ersten Kommunikationsstandard in einem ersten Frequenzbereich; und wobei ein zweiter Satz besagter Kommunikationsleitungen (106) konfiguriert ist zum Interagieren gemäß einem zweiten Kommunikationsstandard, der in einem zweiten Frequenzbereich betrieben wird, der mit besagtem ersten Frequenzbereich überlappt; wobei besagtes Verfahren die folgenden Schritte umfasst:
- Messen (331) von Kopplungsinformation, die indikativ ist für einen Einfluss von ersten Kommunikationssignalen, die über besagten ersten Satz gesendet worden sind, auf die zweiten Kommunikationssignale, die über besagten zweiten Satz gesendet wurden; und
- Abschätzen (332) aus besagter Kopplungsinformation einer angepassten Sendeleistungsdichte oder PSD für besagte zweite Kommunikationssignale in besagtem überlappenden Frequenzbereich, sodass besagter Einfluss besagter zweiter Kommunikationssignale innerhalb eines vorbestimmten Toleranzbereichs (1201) liegt; und
- Anwenden (333) besagter angepasster PSD auf die Kommunikationssignale, die über besagten zweiten Satz gesendet worden sind;
und wobei:
- besagte erste Kommunikationssignale ersten Symbolen (920, 921, 922, 910, 911, 912) einer vorbestimmten festen Länge entsprechen; und wobei besagte zweite Kommunikationssignale Rahmen (901) einer festen Länge entsprechen, weiterhin umfassend zweite Symbole einer festen Länge; und wobei ein Rahmen (901) mit der Zeit unterteilt wird in einen Upload-Teil (904) besagter zweiter Symbole und in einen Download-Teil (902) besagter zweiter Symbole; und wobei eine Länge von besagtem Rahmen (901) einer Länge eines ganzzahligen Betrags besagter erster Symbole (920, 921, 922, 910, 911, 912) entspricht; und wobei ein Beginn besagter Rahmen synchronisiert ist mit einem Beginn besagter erster Symbole; und wobei besagte Messung (331) weiterhin umfasst das Messen des gesamten Rauschens von einem Synchronisationssymbol (920, 912) in besagten ersten Symbolen, wenn besagtes Synchronisationssymbol vollständig in besagten Upload- (904) fällt oder in besagten Download-Teil (902) unter Erhalten einer separaten Messung des Gesamtrauschens jeweils für besagten Upload-Teil und Download-Teil; oder
- besagte zweite Kommunikationssignale zweiten Symbolen (1120, 1121, 1122) einer vorbestimmten festen Länge entsprechen; und wobei besagte erste Kommunikationssignale Rahmen (1135) einer festen Länge entsprechen, weiterhin umfassend erste Symbole einer festen Länge; und wobei ein Rahmen (1135) mit der Zeit unterteilt wird in einen Upload-Teil (1033) besagter erster Symbole und in einen Download-Teil (1031) besagter erster Symbole; und wobei eine Länge von besagtem Rahmen einer Länge eines ganzzahligen Betrags besagter zweiter Symbole (1120, 1121, 1122) entspricht; und wobei ein Beginn besagter Rahmen synchronisiert ist mit einem Beginn besagter zweiter Symbole; und wobei besagte Messung (331) weiterhin umfasst das Messen des gesamten Rauschens von einem Synchronisationssymbol (1130, 1132) in besagten ersten Symbolen unter Erhalten einer Messung des Gesamtrauschens, das indikativ ist für das Hintergrundrauschen zusammen mit Störrauschen von besagtem zweiten Satz.

12. Computerprogramm umfassend computerausführbare Befehle zum Durchführen des Verfahrens nach Anspruch 11, wenn das Programm auf einem Computer läuft.

13. Computerlesbares Speichermedium, umfassend das Computerprogramm-Produkt nach Anspruch 12.

## Revendications

1. Dispositif (100) pour optimiser une coexistence entre des signaux de communication envoyés sur des lignes de communication (101, 102); dans lequel un premier ensemble (101) desdites lignes de communication est configuré pour interagir conformément à une première norme de communication dans une première plage de fréquences; et dans lequel un deuxième ensemble (102) desdites lignes de communication est configuré pour interagir conformément à une deuxième norme de communication fonctionnant dans une deuxième plage de fréquences chevauchant (221) ladite première plage de fréquences ; ledit dispositif étant configuré pour exécuter les étapes suivantes :
- mesurer (331) des informations de couplage indiquant une influence (103) de deuxièmes signaux de communication envoyés sur ledit deuxième ensemble (102) sur des premiers signaux de communication envoyés sur ledit premier ensemble (101); et
- estimer (332) à partir desdites informations de couplage une densité spectrale de puissance ou PSD adaptée pour lesdits deuxièmes signaux de communication dans ladite plage de fréquences chevauchante (221) de sorte que ladite influence desdits deuxièmes signaux de communication soit comprise dans un niveau de tolérance prédéterminé (1201) ; et
- appliquer (333) ladite PSD adaptée à des signaux de communication envoyés sur ledit deuxième ensemble ;
**caractérisé en ce que**
- lesdits premiers signaux de communication correspondent à des premiers symboles (920, 921, 922, 910, 911, 912) d'une longueur fixe prédéterminée ; et dans lequel lesdits deuxièmes signaux de communication correspondent à des trames (901) d'une longueur fixe comprenant en outre des deuxièmes symboles d'une longueur fixe ; et dans lequel une trame (901) est divisée dans le temps en une partie de téléchargement en amont (904) desdits deuxièmes symboles et une partie de téléchargement en aval (902) desdits deuxièmes symboles ; et dans lequel une longueur de ladite trame (901) correspond à une longueur d'une quantité entière desdits premiers symboles (920, 921, 922, 910, 911, 912) ; et dans lequel un début desdites trames est synchronisé avec un début desdits premiers symboles ; et dans lequel ladite mesure (331) comprend en outre la mesure du bruit total à partir d'un symbole de synchronisation (920, 912) dans lesdits premiers symboles lorsque ledit symbole de synchronisation se trouve entièrement dans ladite partie de téléchargement en amont (904) ou dans ladite partie de téléchargement en aval (902) obtenant ainsi une mesure du bruit total séparée pour ladite partie de téléchargement en amont et ladite partie de téléchargement en aval respectivement ; ou
- lesdits deuxièmes signaux de communication correspondent à des deuxièmes symboles (1120, 1121, 1122) d'une longueur fixe prédéterminée; et dans lequel lesdits premiers signaux de communication correspondent à des trames (1135) d'une longueur fixe comprenant en outre des premiers symboles d'une longueur fixe ; et dans lequel une trame (1135) est divisée dans le temps en une partie de téléchargement en amont (1033) desdits premiers symboles et une partie de téléchargement en aval (1031) desdits premiers symboles; et dans lequel une longueur de ladite trame correspond à une longueur d'une quantité entière desdits deuxièmes symboles (1120, 1121, 1122) ; et dans lequel un début desdites trames est synchronisé avec un début desdits deuxièmes symboles ; et dans lequel ladite mesure (331) comprend en outre la mesure du bruit total à partir d'un symbole de synchronisation (1130, 1132) dans lesdits premiers symboles obtenant ainsi une mesure du bruit total indiquant un bruit de fond ainsi qu'un bruit d'interférence à partir dudit deuxième ensemble.

2. Dispositif (100) selon la revendication 1 dans lequel ladite mesure (331) d'informations de couplage comprend la mesure (802, 803) d'un bruit total sur ledit premier ensemble de lignes de communication alors que ledit deuxième ensemble de lignes de communication est actif ; dans lequel ledit bruit total indique un bruit de fond ainsi qu'un bruit d'interférence dudit deuxième ensemble.

3. Dispositif (100) selon la revendication 2 dans lequel ladite mesure (331) d'informations de couplage comprend en outre la désactivation (804, 807) dudit deuxième ensemble de lignes de communication et la mesure (805, 808) dudit bruit de fond.

4. Dispositif (100) selon la revendication 1 dans lequel ladite mesure (331) comprend en outre l'arrêt du fonctionnement sur lesdites deuxièmes lignes de communication pour un nombre prédéterminé de deuxièmes symboles (1032, 1033) durant la transmission dudit symbole de synchronisation (1021) ; et la mesure d'un bruit de fond à partir dudit symbole de synchronisation (1021).

5. Dispositif (100) selon la revendication 1, dans lequel ledit bruit total est mesuré à partir d'un premier symbole de synchronisation (1132) dans ladite partie de téléchargement en amont (1033) et à partir d'un deuxième symbole de synchronisation (1130) dans ladite partie de téléchargement en aval (1031).

6. Dispositif (100) selon la revendication 1, dans lequel ladite estimation (332) de ladite PSD comprend la détermination d'une topologie de réseau desdites lignes de communication, et la détermination d'un sous-ensemble desdites premières lignes de communication non influencées par ledit deuxième ensemble à partir de ladite topologie, et la détermination d'une fréquence de coupure (222) dans ladite plage de fréquences chevauchante (221) au-dessus de laquelle seul ledit sous-ensemble de lignes de communication fonctionne et au-dessus de laquelle ladite PSD n'est pas adaptée et correspond à une PSD maximum (223) autorisée par ladite deuxième norme.

7. Dispositif (100) selon la revendication 1, dans lequel ladite influence desdits deuxièmes signaux de communication conformément à ladite PSD adaptée est inférieure à un bruit de la PSD cible.

8. Dispositif (100) selon la revendication 1, dans lequel ladite PSD adaptée correspond à un profil de service PSD prédéterminé inférieur à un profil PSD maximum déterminé par ladite deuxième norme.

9. Dispositif (100) selon la revendication 1, dans lequel ladite PSD adaptée est proportionnelle à une atténuation du filtre anti-repliement dudit premier ensemble de lignes de communication (101).

10. Dispositif (100) selon la revendication 1, configuré en outre pour exécuter de manière itérative lesdites étapes de mesure (331), d'estimation (332) et d'application (333).

11. Procédé d'optimisation d'une coexistence entre des signaux de communication sur des lignes de communication (105, 106); dans lequel un premier ensemble desdites lignes de communication (105) est configuré pour interagir conformément à une première norme de communication dans une première plage de fréquences ; et dans lequel un deuxième ensemble desdites lignes de communication (106) est configuré pour interagir conformément à une deuxième norme de communication fonctionnant dans une deuxième plage de fréquences chevauchant ladite première plage de fréquences ; ledit procédé comprenant les étapes suivantes :
- mesurer (331) des informations de couplage indiquant une influence de premiers signaux de communication envoyés sur ledit premier ensemble sur des deuxièmes signaux de communication envoyés sur ledit deuxième ensemble ; et
- estimer (332) à partir desdites informations de couplage une densité spectrale de puissance ou PSD adaptée pour lesdits deuxièmes signaux de communication dans ladite plage de fréquences chevauchante de sorte que ladite influence desdits deuxièmes signaux de communication soit comprise dans un niveau de tolérance prédéterminé (1201) ; et
- appliquer (333) ladite PSD adaptée à des signaux de communication envoyés sur ledit deuxième ensemble ;
et dans lequel :
- lesdits premiers signaux de communication correspondent à des premiers symboles (920, 921, 922, 910, 911, 912) d'une longueur fixe prédéterminée ; et dans lequel lesdits deuxièmes signaux de communication correspondent à des trames (901) d'une longueur fixe comprenant en outre des deuxièmes symboles d'une longueur fixe ; et dans lequel une trame (901) est divisée dans le temps en une partie de téléchargement en amont (904) desdits deuxièmes symboles et une partie de téléchargement en aval (902) desdits deuxièmes symboles ; et dans lequel une longueur de ladite trame (901) correspond à une longueur d'une quantité entière desdits premiers symboles (920, 921, 922, 910, 911, 912) ; et dans lequel un début desdites trames est synchronisé avec un début desdits premiers symboles ; et dans lequel ladite mesure (331) comprend en outre la mesure du bruit total à partir d'un symbole de synchronisation (920, 912) dans lesdits premiers symboles lorsque ledit symbole de synchronisation se trouve entièrement dans ladite partie de téléchargement en amont (904) ou dans ladite partie de téléchargement en aval (902) obtenant ainsi une mesure du bruit total séparée pour ladite partie de téléchargement en amont et ladite partie de téléchargement en aval respectivement ; ou
- lesdits deuxièmes signaux de communication correspondent à des deuxièmes symboles (1120, 1121, 1122) d'une longueur fixe prédéterminée; et dans lequel lesdits premiers signaux de communication correspondent à des trames (1135), comprenant en outre des premiers symboles d'une longueur fixe ; et dans lequel une trame (1135) est divisée dans le temps en une partie de téléchargement en amont (1033) desdits premiers symboles et une partie de téléchargement en aval (1031) desdits premiers symboles; et dans lequel une longueur de ladite trame correspond à une longueur d'une quantité entière desdits deuxièmes symboles (1120, 1121, 1122) ; et dans lequel un début desdites trames est synchronisé avec un début desdits deuxièmes symboles; et dans lequel ladite mesure (331) comprend en outre la mesure du bruit total à partir d'un symbole de synchronisation (1130, 1132) dans lesdits premiers symboles obtenant ainsi une mesure du bruit total indiquant un bruit de fond ainsi qu'un bruit d'interférence à partir dudit deuxième ensemble.

12. Produit de programme informatique comprenant des instructions exécutables par un ordinateur pour réaliser le procédé selon la revendication 11 lorsque le programme est exécuté sur un ordinateur.

13. Support de stockage lisible par ordinateur comprenant le produit de programme informatique selon la revendication 12.
